# EUROPEAN PATENT SPECIFICATION

(11) **EP 4 520 913 B1**
(45) Date of publication and mention of the grant of the patent: **24.06.2026**
(21) Application number: 24198863.3
(22) Date of filing: 06.09.2024
(51) Int. Cl.: E06C 5/02, E06C 5/24, B60R 3/02

(54) **IMPROVED LADDER FOR VEHICLES AND RELATED ASSEMBLY METHOD**
VERBESSERTE LEITER FÜR FAHRZEUGE UND ENTSPRECHENDES MONTAGEVERFAHREN
ÉCHELLE AMÉLIORÉE POUR VÉHICULES ET MÉTHODE D'ASSEMBLAGE CORRESPONDANTE

(30) Priority: 11.09.2023 IT 202300018621
(43) Date of publication of application: 12.03.2025
(73) Proprietor: Takler S.r.l., 70022 Altamura (BA) (IT)
(72) Inventor: LORUSSO, Lorenzo, 70022 Altamura, Bari (IT)
(74) Representative: Mitola, Marco

(56) References cited:
- WO-A1-2022/259130
- US-A- 3 008 533

## Description

### FIELD OF APPLICATION

The present invention relates to an improved ladder for vehicles, typically for freight vehicles, such as trucks, lorries, semi-trailers, trailers and the like, and to a related assembly method of said ladder.

### BACKGROUND ART

As is known, vehicles are provided with a ladder, at the loading compartments or boxes, to make it easier for an operator to climb to the loading floor.

Such ladders are typically provided with one or more steps and are welded to the frame of the vehicle or of the loading platform thereof.

The fixed ladders of the prior art are subject to considerable wear and deterioration, even because they are fixed and thus exposed to the weather throughout the entire use of the vehicle.

Therefore, with prolonged use, it often happens that one or more steps can become damaged or detached. If this occurs, the ladder needs to be destructively disassembled, usually by unsoldering or cutting off the ladder walls connected/welded to the vehicle frame.

In the art, it was thus thought to provide removable ladder, which can be removed when they are not needed, so as to limit wear and extend the service life thereof.

However, it is necessary to provide ladders capable of being assembled and disassembled highly quickly because the vehicle driver must be able to access the loading compartment repeatedly during the use of the vehicle and must not waste time in the ladder assembly and storage operations.

Moreover, the need is felt to allow assembling the ladder to the vehicle frame without needing to drill holes in the spars and similar parts of the vehicle frame; indeed, drilling involves a number of technical disadvantages such as processing time and cost, the need for precision in drilling, as well as problems with rusting at the holes that, when drilled, inevitably result in the removal of paint from the spars.

In other words, the need is felt to provide a ladder with universal couplings which do not require any drilling on the frame of the vehicle and can be easily and quickly assembled and disassembled.

At the same time, removable ladder solutions must also ensure the necessary safety standards, despite the assembly and disassembly speed and simplicity.

The known solutions fail to ensure that the aforementioned requirements of ease of use, absence of drilling, and assembly and disassembly speed are met, while complying with adequate safety standards. A solution according to the preamble of claim 1 is disclosed by US 3008533 A.

### OVERVIEW OF THE INVENTION

Therefore, the need is felt to solve the drawbacks and limitations mentioned with reference to the prior art.

Such a need is met by a ladder according to claim 1.

### DESCRIPTION OF THE DRAWINGS

Further features and advantages of the present invention will be more comprehensible from the following description of preferred, non-limiting embodiments thereof, in which:

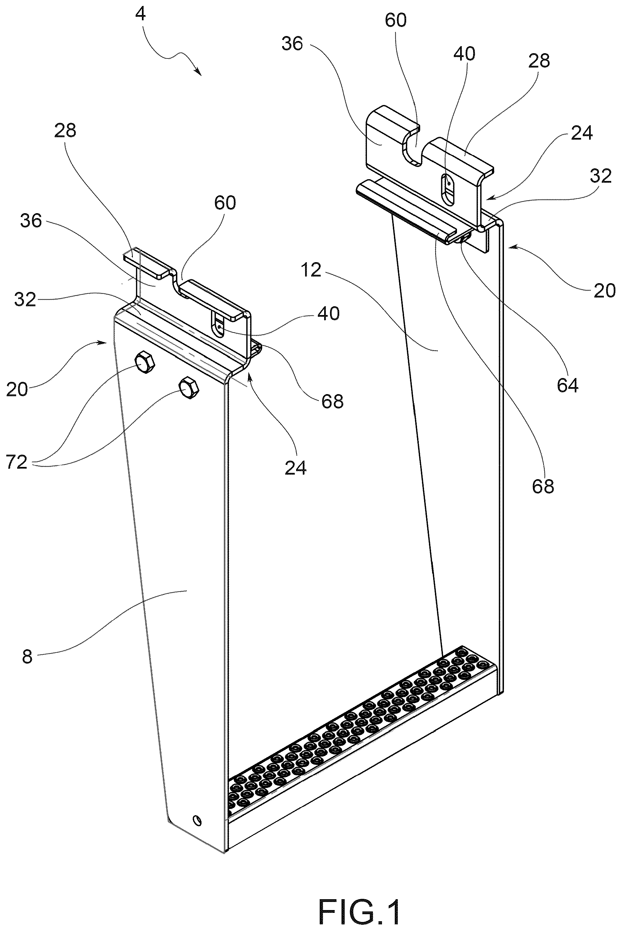

figure 1 depicts a perspective view of a ladder according to a possible embodiment of the present invention;

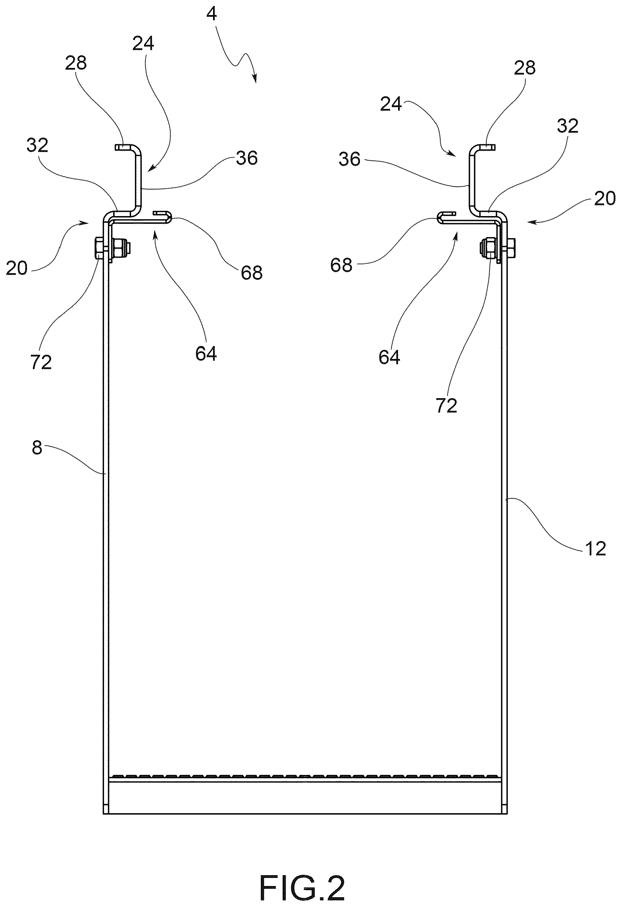

figure 2 depicts a front view of the ladder in figure 1;

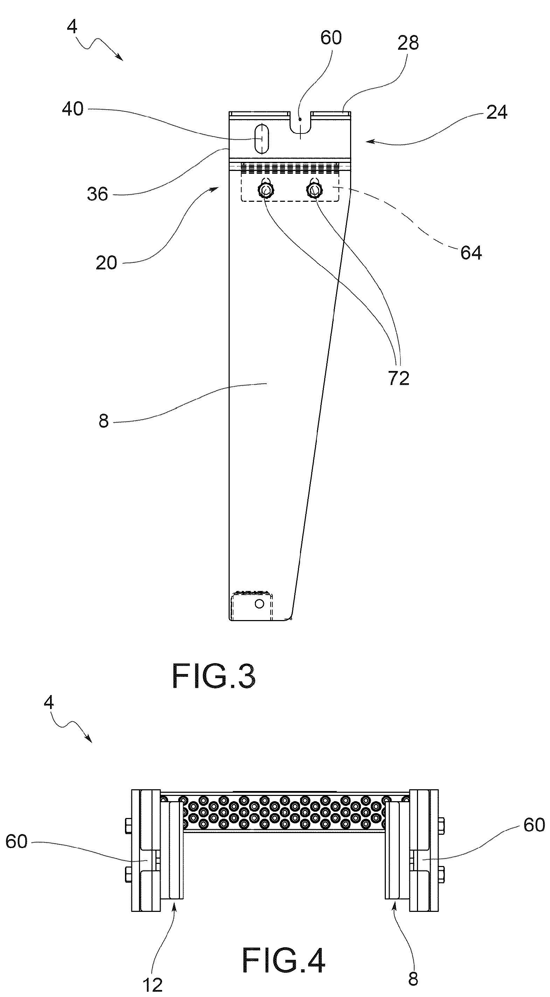

figure 3 depicts a side view of the ladder in figure 1;
figure 4 depicts a top plan view of the ladder in figure 1;

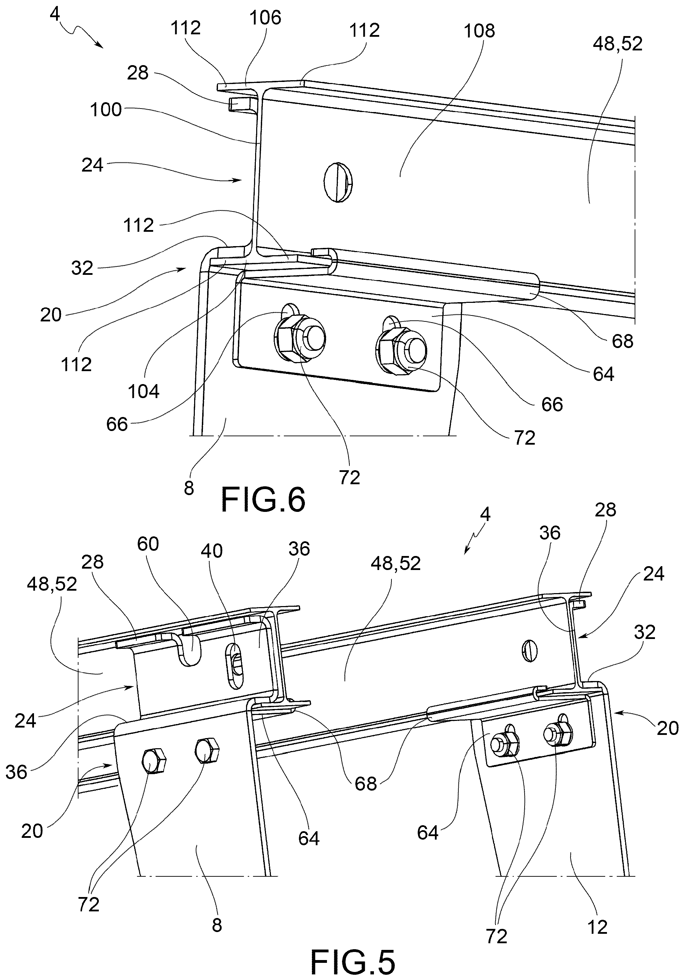

figure 5 depicts a perspective view of the ladder in figure 1, in a vehicle-mounted configuration;
figure 6 depicts a prospective view of a detail of figure 5;

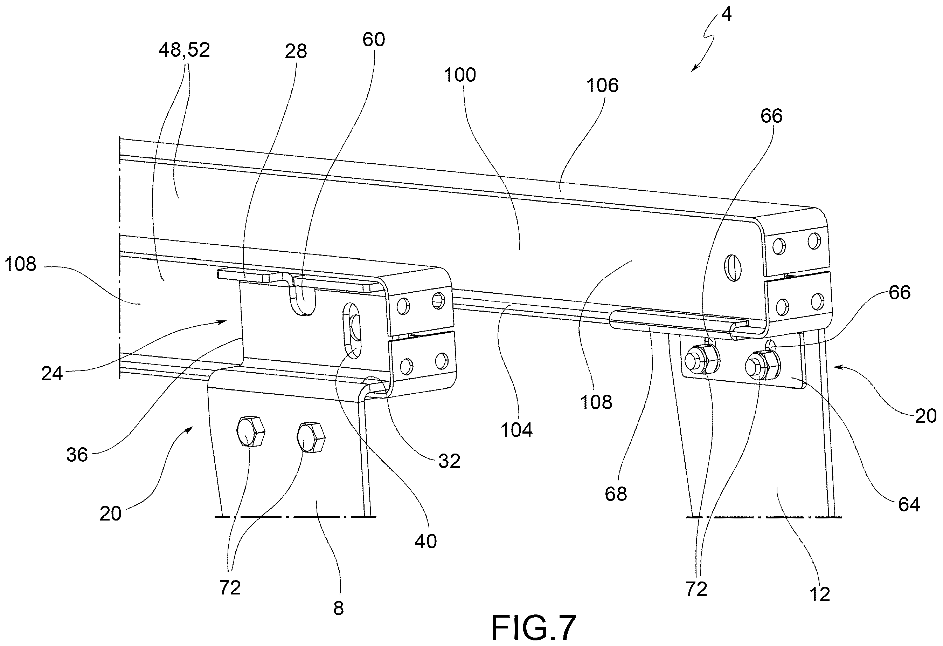

figure 7 depicts a perspective view of the ladder in figure 5, in a vehicle-mounted configuration, from a different angle;

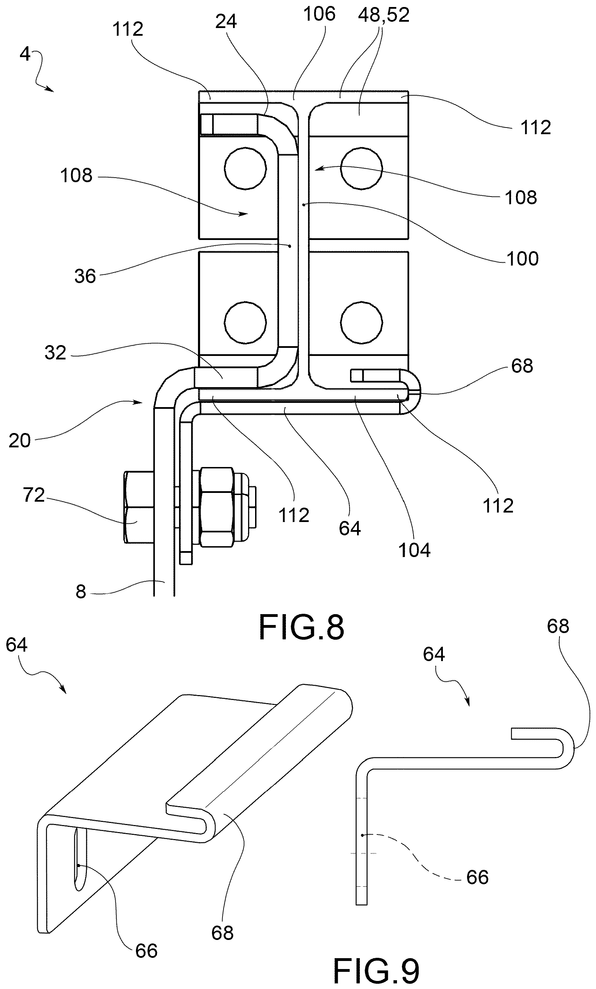

figure 8 depicts a front view of the ladder in figure 5, in a vehicle-mounted configuration;
figure 9 depicts a perspective view and a front view of a fixing counter-plate of a ladder according to a possible embodiment of the present invention.

The elements or parts of elements common to the embodiments described below will be indicated by the same reference numerals.

### DETAILED DESCRIPTION

With reference to the aforesaid figures, reference numeral 4 indicates a ladder as a whole.

Said ladder 4 comprises a pair of uprights 8, 12, directed along a prevailing vertical direction Y-Y, where the uprights are connected to each other by at least one cross member 16, perpendicular to the uprights 8,12 themselves.

The cross member 16 is directed along a transverse direction X-X, perpendicular to said vertical direction Y-Y; the cross member 16 works as a step for the ladder 4.

Preferably, the ladder 4 comprises one or two cross members 16, i.e., one or two steps.

The uprights 8,12 comprise coupling portions 24 at the upper fixing ends 20.

Said coupling portions 24 comprise two horizontal planes 28,32 and a vertical joining rib 36, so as to have an overall 'C' shape.

According to a possible constructional variant, the coupling portions 24 can also be provided with at least one fixing hole 40 for inserting at least one fixing bolt of the ladder 4 to an associable frame 48 of a vehicle.

In particular, the coupling portions 24 are shaped so as to be coupled to a spar 52 of a floor of an associable vehicle.

According to a possible embodiment, said coupling portions 24 are at least partially flexible in a vertical direction Y-Y, so as to allow them to be coupled to a spar 52 of a floor of an associable vehicle.

The spars 52 can generally have a variety of sections, and the coupling portions 24 of the ladder are counter-shaped with respect to said sections. Preferably, the spars have IPE sections, i.e., 'I' or double 'T' sections; it is also possible, as an alternative, to provide spars having different sections, such as 'I' section or rectangular section; in the latter case, the coupling portions 24 are counter-shaped with respect to the base and height of said rectangular section.

More in detail, the spar 52 comprises a vertical segment 100 and a lower transverse base 104, perpendicular to the vertical segment 100, and an upper transverse base 106, parallel to the lower transverse base 104 and connected to the latter by the vertical segment 100. Such a shape identifies a pair of concave seats 108 on opposite sides of the vertical segment 100; at least one of said concave seats 108 of the spar 52 houses said coupling portion 24.

Preferably, the coupling portions 24 are arranged symmetrically with respect to a centreline plane M-M of the ladder, perpendicular to said transverse direction X-X.

According to a possible embodiment, the coupling portions 24 are arranged so as to have the respective vertical joining ribs 36 in an external position, on the opposite side of the centreline plane M-M, with respect to the corresponding uprights 8,12. Such a shape adapts to frames 48 in which the respective spars 52 are arranged at a mutually widen pitch, or even at a greater pitch than the transverse width of the cross member 16 of the ladder 4.

According to a possible embodiment, the coupling portions 24 are arranged so as to have the respective vertical joining ribs 36 in an internal position, on the same side of the centreline plane M-M, with respect to the corresponding uprights 8,12. Such a shape adapts to frames 48 in which the respective spars 52 are arranged at a mutually narrow pitch, or even at a smaller pitch than the transverse width of the cross member 16 of the ladder 4.

According to a possible embodiment, at least one of said horizontal planes 28,32 is provided with a recess 60. Said recess 60 is preferably shaped so as to avoid interference with protruding portions of the frame 48 and/or of the spars 52.

According to a possible embodiment, said uprights 8,12 are at least partially elastically flexible, in the transverse direction X-X, so as to allow elastic spreading or squeezing of the coupling portions 24 along said transverse direction X-X.

Advantageously, the ladder 4 comprises a pair of fixing counter-plates 64, each being arranged on the side opposite to the coupling portion 24 of the corresponding upright 12,16.

Each fixing counter-plate 64 is removably fixed to the upper fixing end 20 of the corresponding upright 12,16, by removable connection means 72. For example, the removable connection means 72 comprise screws, pins or bolts which are inserted into appropriate adjustment holes 66 obtained on the fixing counter-plate 64 and aligned with corresponding through holes obtained on the upper fixing end 20 of the uprights 8,12. Preferably, said adjustment holes 66 are slotted.

In particular, each fixing counter-plate 64 comprises a folded portion 68, configured to be coupled to the spar 52, in particular to a cantilevered end 112 of the lower 104 and/or upper 106 transverse base of the spar 52, on the side opposite to the corresponding coupling portion 24.

In other words, the coupling portion 24 and the fixing counter-plate 64 are locked on the upright on opposite sides along the transverse direction X-X so as to create a bilateral axial constraint (or transverse undercut) with the spar 52, with respect to said transverse direction X-X.

The folded portion 68 extends parallel to the horizontal planes 28,32 of the coupling portions 24.

With respect to the vertical direction Y-Y, the locking of the uprights 8,12 with respect to the spar 52 is ensured, on the one hand, by the shape coupling between the coupling portion 24 and the concave seat 108 of the spar 52 itself, and on the other hand, by the coupling between the folded portion 68 and the cantilevered end 112 of the lower 104 and/or upper 106 transverse base of the spar 52.

The ladder 4 can be made of any material; preferably, it is made of a metal material. According to a possible embodiment, the ladder 4 is made of hot-dip galvanized carbon steel.

The assembly/disassembly operation of a ladder according to the present invention will now be described.

In particular, the assembly includes juxtaposing said ladder 4 to the spars 52 of the floor or frame 48 of the vehicle, so as to couple each of said coupling portions 24 to a corresponding spar 52.

This step includes elastically spreading or juxtaposing the coupling portions 24 to the spars 52 so as to allow fixing the ladder 4 to the spars 52 by shape coupling between the coupling portions 24 and the spars 52 themselves.

The juxtaposition and elastic deformation of the uprights 8,12 and/or coupling portions allows adapting the ladder 4 to frames 48 and/or spars 52 of different sizes or however taking into account the possible tolerances of the structures to which the ladder 4 is to be coupled.

In this step, the fixing counter-plates 64 are not fixed to the upper fixing ends 20 of the uprights 8,12. Once the position of the ladder 4 with respect to the spar 52 has been pre-set, the folded portions 68 are coupled to the respective cantilevered ends 112 of the lower 104 and/or upper 106 transverse base of the spar 52 and the fixing counter-plates 64 are locked to the upper fixing ends of the uprights 8,12 by the removable connection means 72.

As can be appreciated from the above description, the solutions described allow overcoming the drawbacks introduced in the prior art.

In particular, the ladder according to the present invention can be assembled and disassembled very conveniently and quickly by a single operator, without using specific tools.

The assembly/disassembly operation can be repeated several times during the use of the vehicle, even on the same day, without resulting in significant slowdowns of the work activity of loading/unloading goods.

The assembly operation does not include any drilling or machining on the vehicle frame, which therefore remains intact and never compromised.

The ladder is safe and complies with the necessary safety standards while being removable.

For example, if a step on the ladder breaks, the operator can easily replace the ladder by easily removing it from the frame of the vehicle, without using specific tools and without having to destroy/remove welded parts.

In order to meet contingent, specific needs, those skilled in the art may make several changes and variations to the solutions described above.

The scope of protection of the invention is defined by the following claims.

## Claims

1. A ladder (4) comprising:
- a pair of uprights (8,12), directed along a prevailing vertical direction (Y-Y),
- said uprights (8,12) being connected to each other by at least one cross member (16), perpendicular to the uprights (8,12) themselves, directed along a transverse direction (X-X), perpendicular to said vertical direction (Y-Y), said cross member (16) acting as a step of the ladder (4),
wherein
- the uprights (8,12) comprise coupling portions (24) at the upper fixing ends (20),
- said coupling portions (24) having two horizontal planes (28,32) and a vertical joining rib (36), so as to overall have a 'C' shape,
- **characterized in that** the ladder (4) comprises a pair of fixing counter-plates (64),
- wherein the coupling portion (24) and the fixing counter-plate (64) are, in the installed state of the ladder, locked on each upright (8,12) on opposite sides along the transverse direction (X-X) so as to create a bilateral axial constraint with the spar (52), with respect to said transverse direction (X-X),
- each fixing counter-plate (64) being removably fixed to the upper fixing end (20) of the corresponding upright (12,16), by removable connection means (72),
wherein each fixing counter-plate (64) comprises a folded portion (68), configured so as to couple to a vehicle spar (52), in particular to a cantilevered end (112) of a lower (104) and/or upper (106) transverse base of said spar(52), on the opposite side with respect to the corresponding coupling portion (24).

2. The ladder (4) according to claim 1, wherein the folded portion (68) extends parallel to the horizontal planes (28,32) of the coupling portions (24).

3. The ladder (4) according to claim 1 or 2, wherein the removable connection means (72) comprise screws, pins or bolts which are inserted into special adjustment holes (66) obtained on the fixing counter-plate (64) and aligned with corresponding through holes obtained on the upper fixing end (20) of the uprights (8,12).

4. The ladder (4) according to claim 3, wherein said adjustment holes (66) are slotted.

5. The ladder (4) according to any one of claims 1 to 4, wherein said coupling portions (24) are shaped so as to engage with a spar(52) of a floor of an associable vehicle.

6. The ladder (4) according to any one of claims 1 to 5, wherein said coupling portions (24) are at least partially elastically flexible in a vertical direction (Y-Y), so as to allow coupling to a spar (52) of a floor of an associable vehicle.

7. The ladder (4) according to any one of claims 1 to 6, wherein said coupling portions (24) are arranged symmetrically with respect to a centreline plane (M-M) of the ladder (4), perpendicular to said transverse direction (X-X).

8. The ladder (4) according to claim 7, wherein said coupling portions (24) are arranged so as to have the respective vertical joining ribs (36) in an external position, on the opposite side of the centreline plane (M-M), with respect to the corresponding uprights (8,12).

9. The ladder (4) according to claim 7, wherein said coupling portions (24) are arranged so as to have respective vertical joining ribs (36) in an internal position, on the same side of the centreline plane (M-M), with respect to the corresponding uprights (8,12).

10. The ladder (4) according to any one of claims 1 to 9, wherein said fixing hole (40) is arranged on the vertical joining rib (36).

11. The ladder (4) according to any one of claims 1 to 10, wherein at least one of said horizontal planes (28,32) is provided with a recess (60).

12. The ladder (4) according to any one of claims 1 to 11, wherein said uprights (8,12) are at least partially elastically flexible, in the transverse direction (X-X), so as to allow elastic spreading or squeezing of the coupling portions (24) along said transverse direction (X-X) .

13. The ladder (4) according to any one of claims 1 to 12, wherein said ladder (4) is made of hot galvanised carbon steel.

14. Assembly method of a ladder (4) comprising the steps:
- providing a ladder (4) according to any one of claims 1 to 13,
- providing a vehicle having a floor and a plurality of spars (52) parallel to each other,
- juxtaposing said ladder (4) to the spars (52), so as to engage each of said coupling portions (24) to a corresponding spar (52),
- coupling the folded portions (68) of the fixing counter-plates (64) to the respective cantilevered ends (112) of a lower (104) and/or upper (106) transverse base of the spar (52),
- locking the fixing counter-plates (64) to the upper fixing ends (20) of the uprights (8,12) by removable connection means (72).

## Patentansprüche

1. Eine Leiter (4), umfassend:
ein Paar Holme (8,12), ausgerichtet entlang einer vorherrschenden vertikalen Richtung (Y-Y),
wobei die genannten Holme (8,12) miteinander verbunden sind durch wenigstens ein Querelement (16), senkrecht zu den Holmen (8,12) selbst, ausgerichtet entlang einer transversalen Richtung (X-X), senkrecht zu der genannten vertikalen Richtung (Y-Y), wobei das genannte Querelement (16) als eine Stufe der Leiter (4) wirkt,
wobei
die Holme (8,12) Kupplungsabschnitte (24) an den oberen Befestigungsenden (20) umfassen,
die genannten Kupplungsabschnitte (24) zwei horizontale Ebenen (28,32) und eine vertikale Verbindungsrippe (36) aufweisen, so dass sie insgesamt eine "C"-Form aufweisen,
**dadurch gekennzeichnet, dass** die Leiter (4) ein Paar Befestigungsgegenplatten (64) umfasst,
wobei der Kupplungsabschnitt (24) und die Befestigungsgegenplatte (64) im montierten Zustand der Leiter auf jedem Holm (8,12) auf gegenüberliegenden Seiten entlang der transversalen Richtung (X-X) verriegelt sind, so dass eine beidseitige axiale Festlegung mit dem Holm (52) in Bezug auf die genannte transversale Richtung (X-X) erzeugt wird,
jede Befestigungsgegenplatte (64) lösbar an dem oberen Befestigungsende (20) des entsprechenden Holms (12,16) durch lösbare Verbindungsmittel (72) befestigt ist,
wobei jede Befestigungsgegenplatte (64) einen abgekanteten Abschnitt (68) umfasst, der so ausgelegt ist, dass er an einen Fahrzeugholm (52) gekoppelt wird, insbesondere an ein Kragende (112) einer unteren (104) und/oder oberen (106) transversalen Basis des genannten Holms (52), auf der gegenüberliegenden Seite in Bezug auf den entsprechenden Kupplungsabschnitt (24).

2. Leiter (4) nach Anspruch 1, wobei sich der abgekantete Abschnitt (68) parallel zu den horizontalen Ebenen (28,32) der Kupplungsabschnitte (24) erstreckt.

3. Leiter (4) nach Anspruch 1 oder 2, wobei die lösbaren Verbindungsmittel (72) Schrauben, Stifte oder Bolzen umfassen, die in spezielle Einstelllöcher (66) eingesetzt sind, die an der Befestigungsgegenplatte (64) vorgesehen sind und mit entsprechenden Durchgangslöchern ausgerichtet sind, die an dem oberen Befestigungsende (20) der Holme (8,12) vorgesehen sind.

4. Leiter (4) nach Anspruch 3, wobei die genannten Einstelllöcher (66) Langlöcher sind.

5. Leiter (4) nach einem der Ansprüche 1 bis 4, wobei die genannten Kupplungsabschnitte (24) so geformt sind, dass sie mit einem Holm (52) eines Bodens eines zugehörigen Fahrzeugs in Eingriff kommen.

6. Leiter (4) nach einem der Ansprüche 1 bis 5, wobei die genannten Kupplungsabschnitte (24) wenigstens teilweise elastisch flexibel in einer vertikalen Richtung (Y-Y) sind, so dass eine Kopplung an einen Holm (52) eines Bodens eines zugehörigen Fahrzeugs ermöglicht wird.

7. Leiter (4) nach einem der Ansprüche 1 bis 6, wobei die genannten Kupplungsabschnitte (24) symmetrisch in Bezug auf eine Mittelebene (M-M) der Leiter (4) angeordnet sind, senkrecht zu der genannten transversalen Richtung (X-X).

8. Leiter (4) nach Anspruch 7, wobei die genannten Kupplungsabschnitte (24) so angeordnet sind, dass die entsprechenden vertikalen Verbindungsrippen (36) in einer äußeren Position angeordnet sind, auf der gegenüberliegenden Seite der Mittelebene (M-M), in Bezug auf die entsprechenden Holme (8,12).

9. Leiter (4) nach Anspruch 7, wobei die genannten Kupplungsabschnitte (24) so angeordnet sind, dass die entsprechenden vertikalen Verbindungsrippen (36) in einer inneren Position angeordnet sind, auf derselben Seite der Mittelebene (M-M), in Bezug auf die entsprechenden Holme (8,12).

10. Leiter (4) nach einem der Ansprüche 1 bis 9, wobei das genannte Befestigungsloch (40) an der vertikalen Verbindungsrippe (36) angeordnet ist.

11. Leiter (4) nach einem der Ansprüche 1 bis 10, wobei wenigstens eine der genannten horizontalen Ebenen (28,32) mit einer Ausnehmung (60) versehen ist.

12. Leiter (4) nach einem der Ansprüche 1 bis 11, wobei die genannten Holme (8,12) wenigstens teilweise elastisch flexibel sind, in der transversalen Richtung (X-X), so dass ein elastisches Spreizen oder Zusammendrücken der Kupplungsabschnitte (24) entlang der genannten transversalen Richtung (X-X) ermöglicht wird.

13. Leiter (4) nach einem der Ansprüche 1 bis 12, wobei die genannte Leiter (4) aus feuerverzinktem Kohlenstoffstahl hergestellt ist.

14. Montageverfahren einer Leiter (4), umfassend die Schritte:
Bereitstellen einer Leiter (4) nach einem der Ansprüche 1 bis 13,
Bereitstellen eines Fahrzeugs mit einem Boden und einer Vielzahl von Holmen (52), die parallel zueinander verlaufen,
Anordnen der genannten Leiter (4) an den Holmen (52), so dass jeder der genannten Kupplungsabschnitte (24) mit einem entsprechenden Holm (52) in Eingriff gebracht wird,
Koppeln der abgekanteten Abschnitte (68) der Befestigungsgegenplatten (64) an die jeweiligen Kragenden (112) einer unteren (104) und/oder oberen (106) transversalen Basis des Holms (52),
Verriegeln der Befestigungsgegenplatten (64) an den oberen Befestigungsenden (20) der Holme (8,12) durch lösbare Verbindungsmittel (72).

## Revendications

1. Échelle (4) comprenant :
- une paire de montants (8,12), dirigés selon une direction verticale prépondérante (Y-Y),
- lesdits montants (8,12) étant reliés l'un à l'autre par au moins un élément transversal (16), perpendiculaire aux montants (8,12) eux-mêmes, dirigé selon une direction transversale (X-X), perpendiculaire à ladite direction verticale (Y-Y), ledit élément transversal (16) faisant office de marche de l'échelle (4),
dans laquelle
- les montants (8,12) comprennent des portions d'accouplement (24) au niveau des extrémités supérieures de fixation (20),
- lesdites portions d'accouplement (24) présentant deux plans horizontaux (28,32) et une nervure verticale de liaison (36), de manière à présenter globalement une forme en « C »,
- **caractérisée en ce que** l'échelle (4) comprend une paire de contre-plaques de fixation (64),
- dans laquelle la portion d'accouplement (24) et la contre-plaque de fixation (64) sont, à l'état installé de l'échelle, verrouillées sur chaque montant (8,12) sur des côtés opposés selon la direction transversale (X-X) de manière à créer une contrainte axiale bilatérale avec la traverse (52), par rapport à ladite direction transversale (X-X),
- chaque contre-plaque de fixation (64) étant fixée de manière amovible à l'extrémité supérieure de fixation (20) du montant correspondant (12,16), par des moyens de connexion amovibles (72),
dans laquelle chaque contre-plaque de fixation (64) comprend une portion pliée (68), configurée de manière à s'accoupler à une traverse de véhicule (52), en particulier à une extrémité en porte-à-faux (112) d'une base transversale inférieure (104) et/ou supérieure (106) de ladite traverse (52), du côté opposé par rapport à la portion d'accouplement correspondante (24).

2. Échelle (4) selon la revendication 1, dans laquelle la portion pliée (68) s'étend parallèlement aux plans horizontaux (28,32) des portions d'accouplement (24).

3. Échelle (4) selon la revendication 1 ou 2, dans laquelle les moyens de connexion amovibles (72) comprennent des vis, des goupilles ou des boulons qui sont insérés dans des trous d'ajustement spéciaux (66) réalisés sur la contre-plaque de fixation (64) et alignés avec des trous traversants correspondants réalisés sur l'extrémité supérieure de fixation (20) des montants (8,12).

4. Échelle (4) selon la revendication 3, dans laquelle lesdits trous d'ajustement (66) sont oblongs.

5. Échelle (4) selon l'une quelconque des revendications 1 à 4, dans laquelle lesdites portions d'accouplement (24) sont façonnées de manière à s'engager avec une traverse (52) d'un plancher d'un véhicule associable.

6. Échelle (4) selon l'une quelconque des revendications 1 à 5, dans laquelle lesdites portions d'accouplement (24) sont au moins partiellement élastiquement flexibles selon une direction verticale (Y-Y), de manière à permettre l'accouplement à une traverse (52) d'un plancher d'un véhicule associable.

7. Échelle (4) selon l'une quelconque des revendications 1 à 6, dans laquelle lesdites portions d'accouplement (24) sont disposées symétriquement par rapport à un plan médian (M-M) de l'échelle (4), perpendiculaire à ladite direction transversale (X-X).

8. Échelle (4) selon la revendication 7, dans laquelle lesdites portions d'accouplement (24) sont disposées de manière à présenter les nervures verticales de liaison correspondantes (36) dans une position externe, du côté opposé du plan médian (M-M), par rapport aux montants correspondants (8,12).

9. Échelle (4) selon la revendication 7, dans laquelle lesdites portions d'accouplement (24) sont disposées de manière à présenter les nervures verticales de liaison correspondantes (36) dans une position interne, du même côté du plan médian (M-M), par rapport aux montants correspondants (8,12).

10. Échelle (4) selon l'une quelconque des revendications 1 à 9, dans laquelle ledit trou de fixation (40) est disposé sur la nervure verticale de liaison (36).

11. Échelle (4) selon l'une quelconque des revendications 1 à 10, dans laquelle au moins l'un desdits plans horizontaux (28,32) est pourvu d'un évidement (60).

12. Échelle (4) selon l'une quelconque des revendications 1 à 11, dans laquelle lesdits montants (8,12) sont au moins partiellement élastiquement flexibles, dans la direction transversale (X-X), de manière à permettre un écartement ou un serrage élastique des portions d'accouplement (24) selon ladite direction transversale (X-X).

13. Échelle (4) selon l'une quelconque des revendications 1 à 12, dans laquelle ladite échelle (4) est réalisée en acier au carbone galvanisé à chaud.

14. Procédé d'assemblage d'une échelle (4) comprenant les étapes de :
- fournir une échelle (4) selon l'une quelconque des revendications 1 à 13,
- fournir un véhicule présentant un plancher et une pluralité de traverses (52) parallèles les unes aux autres,
- juxtaposer ladite échelle (4) aux traverses (52), de manière à engager chacune desdites portions d'accouplement (24) à une traverse correspondante (52),
- accoupler les portions pliées (68) des contre-plaques de fixation (64) aux extrémités en porte-à-faux respectives (112) d'une base transversale inférieure (104) et/ou supérieure (106) de la traverse (52),
- verrouiller les contre-plaques de fixation (64) aux extrémités supérieures de fixation (20) des montants (8,12) au moyen de moyens de connexion amovibles (72).
